# EUROPEAN PATENT SPECIFICATION

(11) **EP 2 532 094 B1**
(45) Date of publication and mention of the grant of the patent: **06.03.2019**
(21) Application number: 11739971.7
(22) Date of filing: 28.01.2011
(51) Int. Cl.: G06F 1/16, H04M 1/725, G06F 3/14

(54) **MOBILE DEVICE WITH DUAL DISPLAY UNITS AND METHOD FOR CONTROLLING THE DUAL DISPLAY UNITS**
MOBILE VORRICHTUNG MIT ZWEI ANZEIGEEINHEITEN UND VERFAHREN ZUR STEUERUNG DER ZWEI ANZEIGEEINHEITEN
DISPOSITIF MOBILE DOTÉ D'UNITÉS D'AFFICHAGE DOUBLES ET PROCÉDÉ DESTINÉ À COMMANDER LES UNITÉS D'AFFICHAGE DOUBLES

(30) Priority: 04.02.2010 KR 20100010504
(43) Date of publication of application: 12.12.2012
(73) Proprietor: Samsung Electronics Co., Ltd., Suwon-si, Gyeonggi-do, 443-742 (KR)
(72) Inventor: LEE, Jong Hoon, Yongin-si Gyeonggi-do 448-131 (KR); LEE, Myeong Lo, Seoul 134-032 (KR)
(74) Representative: HGF Limited
(86) International application number: PCT/KR2011/000609
(87) International publication number: WO 2011/096675

(56) References cited:
- WO-A1-2010/001699
- KR-A- 20040 055 141
- KR-B1- 100 640 076
- KR-B1- 100 710 388
- US-A1- 2006 034 042

## Description

### Technical Field

This invention relates to mobile electronic systems. More particularly, the invention relates to a mobile device that includes dual display units and a method for controlling the display of screen data on the dual display units.

### Background Art

With the remarkable development of information communication technology and semiconductor technology, various types of mobile devices have also been developed, and accordingly the number of mobile device users has increased. Mobile devices utilize mobile convergence to include additional service functions provided by other types of mobile systems, as well as their traditional service functions. For example, a mobile communication device can include multi-media functions as well as its usual communication function, such as a voice call, message transmission, and reception. Examples of multi-media functions are a TV viewing function (e.g., mobile broadcasting, such as Digital Multimedia Broadcasting (DMB) and Digital Video Broadcasting (DVB)), an audio playback function (e.g., Motion Picture Experts Group (MPEG)-2 Audio Layer 3 (MP3)), a photographing function, an Internet access function, a dictionary browsing function, etc.

Mobile devices output the stored information, information transmitted from external systems, a user's input information, etc., on their display units. Since the display units allow for users' most frequently used interface, they are connected directly with the users' profiles for the mobile devices. In addition, as mobile devices are provided with a multi-media function and an Internet function, the importance of the display units gradually increases. To properly operate the display units in a multi-media environment or an Internet environment requires a large screen size and an increase in quality. However, conventional mobile devices are limited in terms of their screen space.

WO-2010/001699-A1 discloses an information processing device which includes a plurality of display parts, a display control part controlling the display operation of the display parts; an operation reception part receiving the entry of a given operation instruction on display data displayed on one of the display parts; and a data processing part executing processing based on the content of the display data displayed on the one display part and the content of the operation instruction received by the operation reception part. The display control part displays data presenting the results of processing by the data processing part on another display part different from the one display part.

### Disclosure of Invention

### Technical Problem

An aspect of the present invention has is to address at least the above-mentioned problems and/or disadvantages and to provide at least the advantages described below. Accordingly, an aspect of the present invention is to provide a mobile device with dual display units installed inside the main body.

Another aspect of the present invention is to provide technology to implement an optimal display environment in a mobile device with dual display units installed inside the main body.

Yet another aspect of the present invention is to provide a method for controlling dual display units installed as part of the mobile device.

Still another aspect of the present invention is to provide a technology to enhance the convenience of additional functions in a mobile device with dual display units, such as an Internet function, a browsing function, a multi-media function, etc.

### Solution to Problem

In accordance with a first aspect of the present invention, a method for displaying screen images on a mobile device comprising multiple display units is provided. The method comprises: determining whether a dual mode is selected by a user; and displaying a found screen image, searched for according to an execution of a search function, on at least one of first and second display units, based on whether the dual mode is selected; wherein displaying the found screen image comprises: displaying, when the dual mode is not selected, the found screen image on the first and second display units which cooperate with each other to serve as one combined display device; and displaying, when the dual mode is selected, the found screen image on one of the first and second display units.

In accordance with a second aspect of the present invention, a mobile device comprising dual display units is provided. The device comprises: a main body including first and second bodies that are foldably coupled to each other; a first display unit, installed in the first body, arranged to display a screen image; a second display unit, installed in the second body, arranged to display a screen image; and a controller arranged to: determine whether a dual mode is selected by a user; receive an input for executing a search function when the first and second bodies are unfolded; and display a found screen image, searched for according to the execution of the search function, on at least one of the first and second display units, according to whether the dual mode is selected; wherein, to display the found screen image, the controller is arranged to: display, when the dual mode is not selected, the found screen image on the first and second display units which cooperate with each other to serve as one combined display device; and display, when the dual mode is selected, the found screen image on one of the first and second display units.

Also disclosed is a method for displaying screen images on a mobile device comprising multiple display units. The method includes displaying screen images according to an execution of a particular mode on at least one of first and second display units, and displaying a found screen image, searched for according to an execution of a search function, on at least one of the first and second display units, based on whether a dual mode is selected.

Also disclosed is a method for displaying screen images on a mobile device comprising multiple display units. The method includes displaying at least one screen image on first and second display units, displaying a screen image related to an execution of a search function on the second display unit, determining whether a found screen image, searched for according to the execution of the search function is to be displayed in a dual mode, displaying, when the found screen image is not to be displayed in the dual mode, the found screen image as one screen image on the first and second display units that cooperate with each other to serve as one combined display device, and displaying, when the found screen image is to be displayed in the dual mode, the found screen image on the second display unit.

Also disclosed is a mobile device comprising dual display units. The device includes a main body including first and second bodies that are foldably coupled to each other, a first display unit, installed in the first body, for displaying a screen image, a second display unit, installed in the second body, for displaying a screen image, and a controller for receiving an input for executing a search function when the first and second bodies are unfolded and for displaying a found screen image, searched for according to the execution of the search function, on at least one of the first and second display units, according to whether the dual mode is selected.

Other aspects, advantages, and salient features of the invention will become apparent to those skilled in the art from the following detailed description, which, taken in conjunction with the annexed drawings, discloses exemplary embodiments of the invention.

### Advantageous Effects of Invention

As described above, the mobile device with dual display units according to the invention is configured in such a way that the dual display unit is comprised of two display units installed in the main body of the mobile device. When the mobile device displays screen images according to the execution of an application on the dual display unit, the two display units cooperate with each other to serve as one combined display device (one larger overall screen) and display one screen image thereon. Alternatively, the two display units can be independently operated and display different screen images thereon respectively. The method for controlling the dual display unit can provide an optimal display environment to the mobile device that can support an internet function, a multi-media function, a search function, etc. In addition, the method also can display screen images in a variety of modes according to a user's selection. Therefore, the method can lead such a mobile device to be widely used and to increase the competitiveness of such a device, compared with conventional mobile devices.

### Brief Description of Drawings

The above and other aspects, features, and advantages of certain exemplary embodiments of the present invention will be more apparent from the following description taken in conjunction with the accompanying drawings, in which:
FIG. 1 illustrates a schematic block diagram of a mobile device with dual display units according to an exemplary embodiment of the present invention;
FIG. 2 illustrates the front side and inside of the mobile device with dual display units according to an exemplary embodiment of the present invention;
FIGs. 3 to 6 illustrate screens that describe a method for controlling the display of screen data on a dual display unit of a mobile device, according to an exemplary embodiment of the present invention; and
FIG. 7 illustrates a flow chart that describes a method for controlling a display of screen data on a dual display unit of a mobile device, according to an exemplary embodiment of the present invention.

Throughout the drawings, it should be noted that like reference numbers are used to depict the same or similar elements, features, and structures.

### Mode for the Invention

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the exemplary embodiments described herein can be made without departing from the scope of the invention. In addition, descriptions of well-known functions and constructions may be omitted for clarity and conciseness.

The terms or words used in the following description and the claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relates to a mobile device with dual display units and a method for controlling the display of screen data on the dual display units. When a corresponding application program is executed in the mobile device with dual display units, that are referred to as first and second display units, the mobile device can display screen data on one of the dual display units, according to a user's selection. Alternatively, the mobile device can integrate the two display units into a single display unit and display screen data thereon.

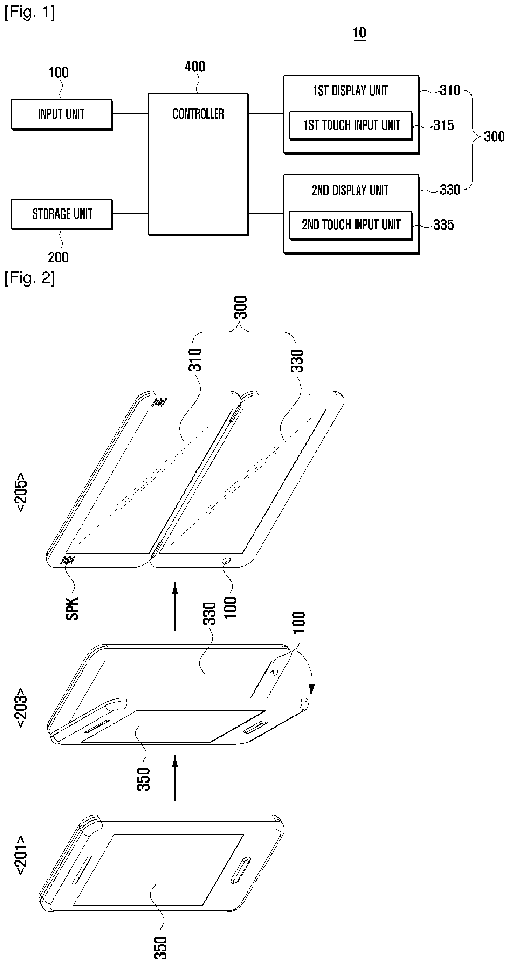

In the following description, the configuration and operations of the mobile device according to exemplary embodiments of the present invention are explained in detail, referring to FIGs. 1 to 7. It should be understood that the invention is not limited to the following exemplary embodiments. It will be noted that there may be many modifications from the exemplary embodiments.

FIG. 1 illustrates a schematic block diagram of a mobile device with dual display units according to an exemplary embodiment of the present invention.

Referring to FIG. 1, the mobile device 10 includes an input unit 100, a storage unit 200, a display unit 300, and a controller 400.

It will be noted that the mobile device may further include a Radio Frequency (RF) unit for communicating with other external systems, an audio processing unit including a microphone and a speaker, a digital broadcasting module for receiving and reproducing digital broadcasts (e.g., Digital Multimedia Broadcast (DMB), Digital Video Broadcast (DVB), etc.), a camera module for taking photographs, a Bluetooth communication module for performing Bluetooth communication, an Internet communication module for performing Internet communication, etc. These elements are known in the conventional art and will not be described in detail in this disclosure.

The input unit 100 senses a user's input, creates an input signal corresponding thereto, and transfers the input signal to the controller 400. The input unit 100 may include an exterior input unit installed to the outer side of the mobile device, an interior input unit installed to the inner side of the mobile device, and a side input unit installed to a side of the mobile device. The input unit 100 may include a number of buttons. In an exemplary embodiment of the invention, the input unit 100 includes one or more buttons that can create input signals according to a search event, etc., which will be described later.

The storage unit 200 stores data and programs that are executed in the mobile device. The storage unit 200 may be implemented with one or more volatile or non-volatile memory devices. The storage unit 200 can permanently or temporarily store an operating system for the mobile device, data and programs for controlling the display operations of the display unit 300, and data and applications related to additional functions such as an Internet function, a search function, etc.

The display unit 300 is implemented with dual display units that are referred to as a first display unit 310 and a second display unit 330. In an exemplary embodiment of the invention, the display unit 300 may further include a front display unit 350 installed to the front side of the mobile device, which will be described later. If the front display unit 350 is installed, the first display unit 310 and the second display unit 330, comprising the dual display unit, are located inside the mobile device, with respect to the front display unit 350. The display unit 300 may be implemented with a Liquid Crystal Display (LCD), an Organic Light Emitting Diode (OLED), an Active Matrix OLED (AMOLED), or the like.

The mobile device can integrate the first and second display unit 310 and 330 into one larger overall screen and then display a screen image thereon. Alternatively, the mobile device can independently operate the first and second display units 310 and 330 and display the same one screen image or two different screen images thereon, respectively.

The first and second display units 310 and 330 may include first and second touch input units 315 and 335, respectively. The first and second display units 310 and 330 may be implemented with first and second touch screens, respectively. In an exemplary embodiment of the invention, it is assumed that the first display unit 310 is installed to the top part (or first body) of the main body of the mobile device, and the second display unit 330 is installed to the bottom part (or second body) of the main body. The first and second bodies are rotatably coupled to each other. Alternatively, the first body may be split and slid from the second body such that the bodies are then coupled to each other via their edges.

The controller 400 controls the entire operation of the mobile device. The controller 400 of the exemplary embodiment is implemented with one or two microprocessor chips. When the controller 400 is implemented with two microprocessor chips, one of them may serve as a dedicated chip for controlling the first or second display unit 310 or 330. In particular, the controller 400 can integrate and operate the first and second display units 310 and 330 as a single combined display unit to display one screen image thereon. Alternatively, the controller 400 can independently operate the first and second display units 310 and 330 and display the same one screen image or two different screen images thereon, respectively. The controller 400 can control operations related to additional functions or the display of screen data. This will be described in detail later.

FIG. 2 illustrates a front side and inside of a mobile device with dual display units according to an exemplary embodiment of the present invention.

Referring to FIG. 2, diagram 201 shows a perspective view of the front side of the mobile device. Diagram 203 shows a perspective view when the first and second bodies of the mobile device are partially open. Diagram 205 shows a perspective view of the inside of the mobile device where it is completely open.

As described above, the mobile device includes first and second display units 310 and 330 inside the body and a display unit 350 on the front side. In another exemplary embodiment of the invention, the mobile device may be implemented in such a way that the display unit 350 is not installed to the front side of the body. The display units 310, 330, and 350 may be implemented with a Liquid Crystal Display (LCD), an OLED, an AMOLED, or the like. As shown in diagram 205 of FIG. 2, the display unit 310 is installed inside the top part (or first body) of the body of the mobile device and, hereinafter, is called a first display unit 310. Likewise, the display unit 330 is installed to the bottom part (or second body) of the body of the mobile device and, hereinafter, is called a second display unit 330. It should be understood, for the sake of convenient description, that the body of the exemplary mobile device is divided into the top part (a first body) and the bottom (a second body) and, correspondingly, the display unit is divided into the first and second display units 310 and 330. In the following description, the first and second display units 310 and 330 are referred to as the dual display units (310 and 330).

The dual display units (310 and 330) display screens when the applications are executed in the mobile device. Examples of the applications are related to their functions, such as Internet, multimedia, search, communication, e-book reading, motion picture, photographing, image view, TeleVision (TV) view (e.g., DMB, DVB, etc.), audio file playback (e.g., Motion Picture Experts Group (MPEG)-2 Audio Layer 3 (MP3)), etc. The front display unit 350 displays a screen when a general function, such as communication, is executed. The display units 310, 330, and 350 can display screen data in a portrait mode or a landscape mode.

In particular, the dual display units (310 and 330) can operate the first and second display units 310 and 330 as a single combined display device to display a single screen image thereon. Alternatively, the dual display units (310 and 330) can independently operate the first and second display units 310 and 330, and display the same one screen image or two different screen images thereon, respectively.

Although not all shown in FIG. 2, the mobile device may include a speaker SPK, a microphone, a camera module, etc., to the front or inside thereof. As shown in FIG. 2, although the mobile device is configured in such a way that the input unit 100 is installed inside the body, the input unit 100 may also be installed to the front side. In addition, it should be understood that that the mobile device may be configured to include a number of input buttons as the input unit, installed to the side.

The main body of the mobile device is comprised of the top part (first body) with the first display unit 310 and the bottom part (second body) with the second display unit 330, which can be unfolded as they are rotated with respect to their common edge. According to exemplary types of mobile devices, their main body parts are operated in such a way that the top part (first body) and the bottom part (second body) are split and slid in opposite directions and then the top part (first body) is coupled to the bottom part (second body).

As described above, the mobile device is implemented to include dual display units, called the first and second display units 310 and 330, respectively. The mobile device can integrate and operate the first and second display units 310 and 330 as a single combined display device to display a screen image thereon. Alternatively, the mobile device can independently operate the first and second display units 310 and 330 and display the same screen data thereon simultaneously or display different screen data thereon, respectively. The method for displaying screen data on the dual display unit will be described in detail later.

The mobile device of the exemplary embodiment of the present invention shown in FIGs. 1 and 2 can be applied to all types of mobile devices, for example, a bar type, a folder type, a slide type, a swing type, a flip-flop type, etc. The mobile device with dual display units installed to the inside, according to the present invention, includes all information communication devices, multimedia devices, and their applications, which are operated according to communication protocols corresponding to a variety of communication systems. For example, the mobile device can be applied to mobile communication terminals, Portable Multimedia Players (PMPs), digital broadcast players, Personal Digital Assistants (PDAs), audio players (e.g., MP3 players), mobile game players, smart phones, etc. In addition, the method for displaying screen data on the dual display unit of the mobile device, according to the present invention, can be adapted to televisions, Large Format Displays (LFDs), Digital Signages (DSs), media poles, personal computers, laptop computers, etc.

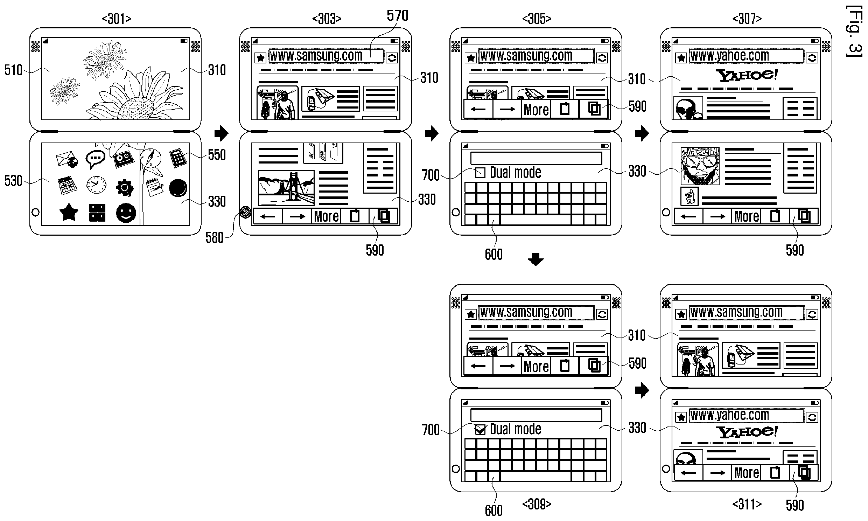

FIG. 3 illustrates screens that describe a method for controlling the display of screen data on a dual display unit of a mobile device, according to an exemplary embodiment of the present invention.

Referring to diagram 301 of FIG. 3, the first display unit 310 displays an idle screen 510 and the second display unit 330 displays a menu screen 530. This state is when the mobile device operates in an idle mode. The mobile device can access the Internet in an idle mode, according to a presetting. For example, the mobile device can access the Internet by operating a shortcut key (not shown) of the input unit 100, installed to the main body, or by selecting a shortcut icon 550 displayed on a menu screen 530. When the shortcut key or the shortcut icon 550 is operated, the dual display unit (310 and 330) displays a screen image connected to a preset service provider function as shown in diagram 303 of FIG. 3. That is, the first and second display units 310 and 330 cooperate as a single combined display device (one larger overall screen) that displays one screen image (called a first screen image).

After displaying the first screen image on the dual display unit (310 and 330), the exemplary mobile device can perform a corresponding operation according to new internet access, web browsing, function search, etc. For example, when selecting an input field 570 on the screen image on the first display unit 310, or operating the shortcut button 580 of the inside input unit 100, or selecting a soft key on a sub menu 590 on the second display unit 330, an input screen is displayed on the second display unit 330 as shown in diagram 305 of FIG. 3. This is called an input mode. As shown in diagram 305 of FIG. 3, the second display unit 330 displays a virtual keypad 600 and a dual mode selection control box 700 in the input mode. The dual mode selection control box 700 refers to an item that, according to whether it is selected, allows a screen image of a newly executed application to be displayed on the combined screen of the dual display unit (310 and 330) or on one of the first or second display units 310 and 330. The dual mode selection control box 700 may be shown on a predetermined region on the first display unit 310 or a predetermined region on the second display unit 330, according to a user's settings. That is, the dual mode selection control box 700 can be shown on the first and/or second display units 310 and 330, via a presetting of the mobile device or a user's settings.

When the second display unit 330 shows a screen image while the mobile device operates in the input mode, the user can input a URL, a keyword, etc., thereby searching for information corresponding thereto. For example, the user can input text (keyword) for information to be searched for in the second display unit 330 via the virtual keypad 600 and then create an input signal for executing the search. The mobile device can process and display screen data in two modes according to whether the dual mode selection control box 700 is selected. One mode is a case where the user does not select the dual mode selection control box 700 and inputs an execution command. Another mode is a case where the user selects the dual mode selection control box 700 and inputs an execution command.

When the user does not select the dual mode selection control box 700 and inputs a command for searching for corresponding information, the controller 400 displays a screen image corresponding to the searched result on the dual display unit (310 and 330) as shown in diagram 307 of FIG. 3. That is, the controller 400 displays a screen image (a second screen image), searched for according to the input information, on the first and second display units 310 and 330 which cooperate with each other as one combined display device (one larger overall screen).

On the other hand, when the user selects the dual mode selection control box 700 and also inputs a command for searching for corresponding information, as shown in diagram 309 of FIG. 3, the controller 400 displays different screen images on the first and second display units 310 and 330 as shown in diagram 311 of FIG. 3. That is, the controller 400 displays first and second screen images on the first and second display units 310 and 330, respectively.

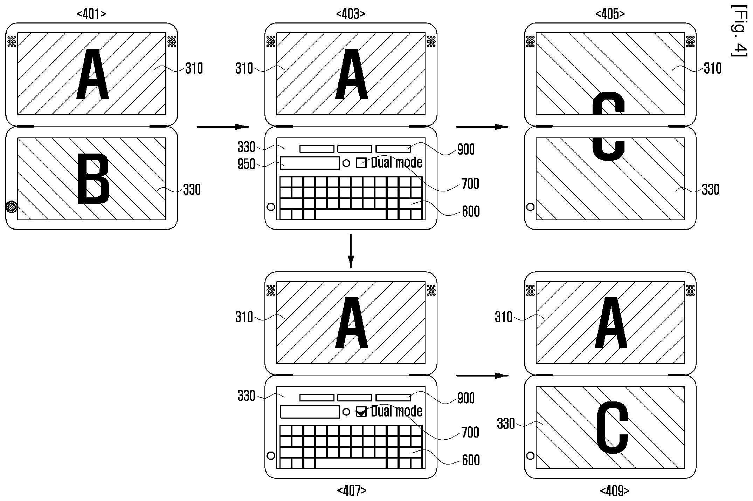

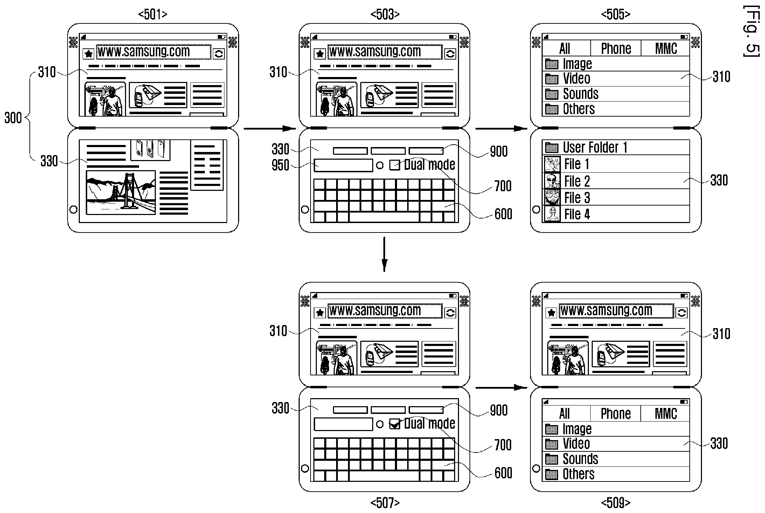

FIGs. 4 and 5 illustrate screens that describe a method for controlling a display of screen data on a dual display unit of a mobile device, according to an exemplary embodiment of the present invention.

Referring to diagram 401 of FIG. 4, the first display unit 310 displays screen image 'A' and the second display unit 330 displays screen image 'B'. It should be understood, for the sake of convenient description, that screen images are divided into screen image 'A' and screen image 'B'. This illustrates that the first and second display units 310 and 330 are displaying different screen images, respectively. That is, the first and second display units 310 and 330 can display different screen images, respectively, as shown in diagram 301 of FIG. 3. Alternatively, the first and second display units 310 and 330 can cooperate with each other as one combined display device (one larger overall screen) and can display one screen image, as shown diagram 501 of FIG. 5.

The exemplary mobile device can execute a search function, according to a preset method, while the first and second display units 310 and 330 are displaying the screen images as shown in diagram 401 of FIG. 4. For example, a search function can be executed by operating a shortcut key 580 of the input unit 100, installed to the main body of the mobile device, or by selecting a soft key button installed to at least one of the first and second display units 310 and 330. When the shortcut key or the soft key button is operated, the second display unit 330 removes the screen image 'B' and shows a screen image for an input mode as shown in diagram 403 of FIG. 4. That is, while the first display unit 310 continues displaying the screen image 'A', the second display unit 330 displays a screen image for an input mode, which is shown as an example in diagram 503 of FIG. 5. That is, as shown in diagram 503 of FIG. 5, the first display unit 310 displays the screen image shown in diagram 501 of FIG. 5, and the second display unit 330 displays the screen image for an input mode. The screen image for an input mode shows a virtual keypad 600, a dual mode selection control box 700, search option items 900, an input field 950, etc. as shown in diagram 403 of FIG. 4 and diagram 503 of FIG. 5.

When the screen image for an input mode is displayed on the second display unit 330, a search option can be selected, i.e., the user can select one of the search option items 900. Examples of the search option items 900 are a phone book item for searching for phone book information from the storage unit 200, a content item for searching for a corresponding content from the storage unit 200, and an Internet item for web browsing. After selecting a search option via the search option items 900, the user can input/select a keyword (or a Uniform Resource Locator (URL)) to be searched for. For example, after the user selects the input field 950 on the second display unit 330, he/she can input a keyword (or a URL) or select it via a drop menu. In addition, a screen image display format by a dual mode can be determined by selecting the dual mode selection control box 700 before executing the search for a keyword (or URL) that is input or before inputting a keyword (or URL).

The screen image can be processed and displayed in two modes according to whether the dual mode selection control box 700 is selected. One mode is a case where the user does not select the dual mode selection control box 700 and selects a command for searching for a keyword (or URL) that is input. Another mode is a case where the user selects the dual mode selection control box 700 and selects a command for searching for a keyword (or URL) that is input.

When the user does not select the dual mode selection control box 700 and selects a command for searching for a keyword (or URL) that is input as shown in diagram 403 of FIG. 4, the mobile device displays screen image 'C', searched for according to the input keyword (or URL), on the dual display unit (310 and 330) as shown in diagram 405 of FIG. 4. That is, the mobile device displays screen image 'C', searched for according to the input keyword (or URL), on the first and second display units 310 and 330 which cooperate with each other as one combined display device (one larger overall screen). The screen image 'C' may be, for example, one of a phone book screen image, a content screen image, and an internet screen image. The phone book screen image can be searched for according to a search option selected via the search option items 900 and according to a keyword (or URL) that is input to the search field 950. The content screen image can be searched for according to a key word. The internet screen image refers to a screen image that can be searched for according to a keyword via a web search engine or when the mobile device accesses the Internet based on a URL. An example showing screen image 'C' on the dual display unit (310 and 330) is illustrated on diagram 505 of FIG. 5. That is, screen images 'A' and 'B' are removed from the first and second display units 310 and 330, respectively, and then one screen image (e.g., a content screen image) appears on the first and second display units 310 and 330, cooperating with each other as one combined display device (one larger overall screen), as shown in diagram 505 of FIG. 5.

On the other hand, when the user selects the dual mode selection control box 700 and also selects a command for searching for a keyword (or URL) that is input as shown in diagram 407 of FIG. 4, the mobile device displays screen image 'C', searched for according to the input keyword (or URL), on the second display unit 330 as shown in diagram 409 of FIG. 4. That is, while continuing to display screen image 'A' on the first display unit 310, the mobile device removes a screen image for an input mode and displays screen image 'C', searched for according to the input keyword (or URL), on the second display unit 330, which, as an example, is shown in diagrams 507 and 509 of FIG. 5. When the user selects the dual mode selection control box 700 and also selects a command for searching for a keyword (or URL) that is input as shown in diagram 507 of FIG. 5, the first display unit 310 continues displaying screen image 'A' (e.g., an Internet screen image), and the second display unit 330 removes a screen image for an input mode and displays a screen image that is searched for (i.e., a content screen image), as shown in diagram 509 of FIG. 5.

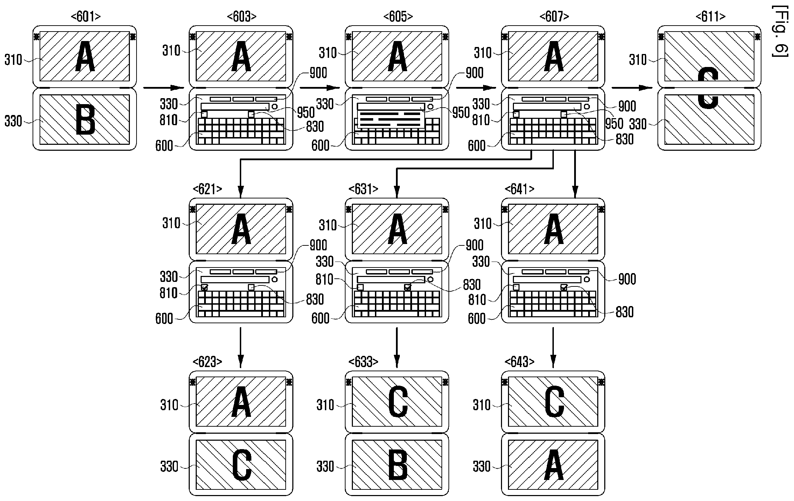

FIG. 6 illustrates screens that describe a method for controlling a display of screen data on a dual display unit of a mobile device, according to an exemplary embodiment of the present invention.

Referring to diagram 601 of FIG. 6, the first display unit 310 displays screen image 'A' and the second display unit 330 displays screen image 'B'. The mobile device can execute a search function, according to a preset method, while the first and second display units 310 and 330 are displaying the screen images as shown in diagram 601 of FIG. 6. The searching operation can be performed as described in the previous section. When a user's operation conducts a search function, the second display unit 330 removes screen image 'B' and displays a screen image for an input mode, as shown in diagram 603 of FIG. 6. That is, the mobile device continues displaying screen image 'A' on the first display unit 310 and displays a screen image for an input mode on the second display unit 330. The screen image for an input mode shows a virtual keypad 600, a dual mode selection control box, search option items 900, an input field 950, etc. as shown in diagram 603 of FIG. 6. The dual mode selection control box, shown in diagram 603, is comprised of a dual mode down selection control box810andadualmodeupselectioncontrolbox830.

When the screen image for an input mode is displayed on the second display unit 330, the user can select a search option or input a keyword (or URL). A keyword (or URL) can be input via the virtual keypad 600 or a drop menu as shown in diagram 605 of FIG. 6. A screen image display format by a dual mode can be determined by selecting the dual mode selection control box.

The screen image can be processed and displayed in four modes according to whether the dual mode selection control box is selected or whether the dual mode down or up selection control box 810 or 830 is selected. One mode is a case where the user does not select the dual mode selection control box and selects a command for searching for a keyword (or URL) that is input. An other mode is a case where the user selects the dual mode down selection control box 810 and selects a command for searching for a keyword (or URL) that is input. The other modes are cases where the user selects the dual mode up selection control box 830 and selects a command for searching for a keyword (or URL) that is input, and displays the screen images according to a presetting method.

When the user does not select the dual mode selection control box and selects a command for searching for a keyword (or URL) that is input, as shown in diagram 607 of FIG. 6, the mobile device displays screen image 'C', searched for according to the input keyword (or URL), on the dual display unit (310 and 330) as shown in diagram 611 of FIG. 6. That is, the mobile device displays screen image 'C', searched for according to the input keyword (or URL), on the first and second display units 310 and 330 which cooperate with each other as one combined display device (one larger overall screen).

When the user selects the dual mode down selection control box 810 and selects a command for searching for a keyword (or URL) that is input as shown in diagram 621 of FIG. 6, the mobile device displays screen image 'C', searched for according to the input keyword (or URL), on the second display unit 330, as shown in diagram 623 of FIG. 6. That is, the first display unit 310 continues displaying screen image 'A', and the second display unit 330 displays screen image 'C' searched for according to the input keyword (or URL).

When the user selects the dual mode up selection control box 830 and selects a command for searching for a keyword (or URL) that is input as shown in diagram 631 of FIG. 6, the mobile device displays screen image 'C', searched for according to the input keyword (or URL), on the first display unit 310, and can display screen image 'B', as previously displayed, on the second display unit 330, as shown in diagram 633 of FIG. 6. That is, the mobile device may be operated in such a way that the first display unit 310 removes screen image 'A' and then displays screen image 'C' that is searched for and the second display unit 330 removes the screen image for an input mode and then displays screen image 'B' as shown in diagram 601 which was previously displayed.

Alternatively, when the user selects the dual mode up selection control box 830 and selects a command for searching for a keyword (or URL) that is input as shown in diagram 641 of FIG. 6, the mobile device displays screen image 'C', searched for according to the input keyword (or URL), on the first display unit 310, and can display screen image 'A' on the second display unit 330, as shown in diagram 643 of FIG. 6. That is, the mobile device may be operated in such a way that the first display unit 310 removes screen image 'A' and then displays screen image 'C' that is searched for and the second display unit 330 removes the screen image for an input mode and then displays screen image 'A' that has been displayed previously on the first display unit 310.

More particularly, the displaying of the screen image on the second display unit 330 under the condition where the dual mode up selection control box 830 is selected can be performed according to a default option set in the mobile device or according to a user's settings. For example, when the mobile device is set in such a way as to display a screen image (e.g., screen image 'B') that was displayed on the second display unit 330, it processes screen images as shown in diagram 633 of FIG. 6. Likewise, when the mobile device is set in such a way as to display a screen image (e.g., screen image 'A') that has been displayed previously on the first display unit 310, it processes screen images as shown in diagram 643 of FIG. 6.

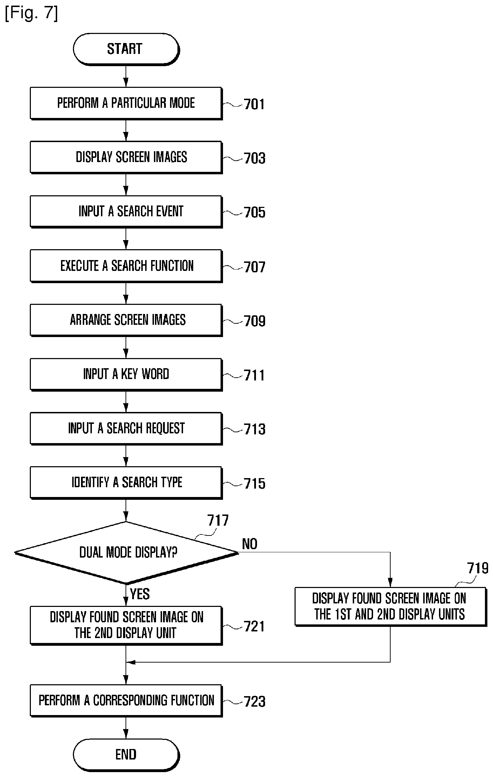

FIG. 7 illustrates a flowchart that describes a method for controlling a display of screen data on a dual display unit of a mobile device, according to an exemplary embodiment of the present invention.

Referring to FIG. 7, when the controller 400 performs a particular mode at step 701, it displays corresponding screen images on the first and second display units 310 and 330 at step 703. During the particular mode, the controller 400 detects a search event that is input at step 705. For example, when the main body of the mobile device is unfolded, the controller 400 turns on the first and second display units 310 and 330 and allows the mobile device to operate in an particular mode when at least one application is executed according to a user's request. The controller 400 can display screen images according to the operation in the mode on the first and second display units 310 and 330, respectively. In that case, the controller 400 can display one screen image on the first and second display units 310 and 330, cooperating with each other to serve as one combined display device (one larger overall screen). Alternatively, the controller 400 can display two different screen images on the first and second display units 310 and 330, respectively. While displaying the screen images on the first and second display units 310 and 330, the controller 400 can detect whether a search event occurs. The search event can be input, for example, by operating a shortcut key 580 of the input unit 100 installed to the main body of the mobile device or by selecting a soft key on at least one of the first and second display units 310 and 330. When the user operates the shortcut key or the soft key, the controller 400 can receive an input signal corresponding thereto.

When the controller 400 detects the search event, it executes a search function in the mobile device at step 707 and then controls the display of screen images at step 709. For example, the controller 400 can display a screen image according to the execution of a search function on the second display unit 330. The screen image according to the execution of a search function may include a virtual keypad 600, a dual mode selection control box 700, search option items 900, an input field 950, etc.

While the controller 400 is displaying the screen image according to the search event, it can receive a keyword or a URL search request, via the virtual keypad 600 at step 711. For example, when the user selects the input field 950 and operates the keys corresponding to a keyword on the virtual keypad 600, the controller 400 receives input signals corresponding to the operated keys and displays the keyword according to the input signals on the input field 950. The user can select the search option items 900 and the dual mode selection control box700.

After that, the controller 400 can receive a search request according to the keyword at step 713. For example, when the user inputs a keyword and then operates a confirmation key for executing a preset search command, the controller 400 can receive an input signal corresponding thereto.

When the controller 400 detects a search request, it identifies the type of search at step 715. For example, the controller 400 can determine whether a selection is made of the search option items 900 and the dual mode selection control box 700 according to a search request. When the dual mode selection control box 700 is selected, the controller 400 determines whether a screen image is to be displayed in a dual mode at step 717.

When the controller 400 ascertains at step 717 that a screen image is not to be displayed in a dual mode, i.e., that a search request is made in a state where the dual mode selection control box 700 is not selected, it displays the screen image, searched for according to the search option, on the first and second display units 310 and 330 cooperating with each other to serve as one combined display device (one larger overall screen) at step 719. In that case, the controller 400 can process the screen image, having been displayed on the first and second display units 310 and 330, as a background image. While the controller 400 is displaying the screen image, searched for according to the search option, on the first and second display units 310 and 330 cooperating with each other to serve as one combined display device (one larger overall screen), it can receive a user's request and then perform an operation corresponding thereto at step 723. Examples of the operations according to a user's request are operations of scrolling a found screen image, moving to a previous menu, performing a new searching operation, etc.

On the other hand, when the controller 400 ascertains at step 717 that a screen image is displayed in a dual mode, i.e., that a search request is made in a state where the dual mode selection control box 700 is selected, it displays a screen image, searched for according to the search option, on the second display unit 330 at step 721. In that case, the controller 400 continues displaying a screen image having been displayed previously on the first display unit 310, and displays a screen image, searched for according to the search option, on the second display unit 330 on which a screen image, which was displayed previously on the second display unit 330, is processed as a background image. After that, while the controller 400 is displaying different screen images on the first and second display units 310 and 330 respectively, it can receive a user's request and then perform an operation corresponding thereto at step 723. As described above, examples of the operations according to a user's request are operations of scrolling a found screen image, moving to a previous menu, performing a new searching operation, etc.

As described above, the method for displaying screen images on dual display units according to an exemplary embodiment of the present invention can be implemented with program commands that can be conducted in various types of computers and recorded in computer-readable recording media. The computer-readable recording media contain program commands, data files, data structures, or the like, or a combination thereof. The program commands recorded in the recording media may be specifically designed or configured to comply with the present invention or may include software well-known to the person of ordinary skill in the art.

The computer-readable recoding media includes hardware systems for storing and conducting program commands. Examples of the hardware systems are magnetic media such as a hard disk, floppy disk, a magnetic tape, optical media such as Compact Disk ?? Read Only Memory (CD-ROM) and Digital Versatile Disk (DVD), MagnetoOptical Media, such as floptical disk, Read Only Memory (ROM), Random Access Memory (RAM), flash memory, etc. The program commands may include assembly language or machine code complied by a complier and a higher level language interpreted by an interpreter. The hardware systems may be implemented with at least one software module.

While the present invention has been shown and described with reference to certain exemplary embodiments thereof, it will be understood by those skilled in the art that various changes in form and details may be made therein without departing for the scope of the invention as defined in the appended claims and their equivalents.

## Claims

1. A method for displaying screen images on a mobile device (10) comprising multiple display units (310, 330), the method comprising:
determining (717) whether a dual mode is selected by a user; and
displaying (719, 721) a found screen image, searched for according to an execution of a search function, on at least one of first and second display units (310, 330) based on whether the dual mode is selected;
wherein displaying (719, 721) the found screen image comprises:
displaying (719), when the dual mode is not selected, the found screen image on the first and second display units (310, 330) which cooperate with each other to serve as one combined display device (300); and
displaying (721), when the dual mode is selected, the found screen image on one of the first and second display units (310, 330).

2. The method of claim 1, wherein displaying (719, 721) the found screen image comprises:
continuing to display on the first display unit (310), when the dual mode is selected, a screen image that has been displayed previously on the first display unit (310); and
displaying (721) the found screen image on the second display unit (330).

3. The method of claim 1, wherein displaying (719, 721) the found screen image comprises:
displaying, when the dual mode is selected, the found screen image on the first display unit (310); and
displaying a screen image, which was previously displayed on the second display unit (330) according to the execution of a particular mode, on the second display unit (330).

4. The method of claim 1, wherein displaying (719, 721) the found screen image comprises:
displaying, when the dual mode is selected, the found screen image on the first display unit (310); and
displaying a screen image, which was displayed previously on the first display unit (310) according to the execution of a particular mode, on the second display unit (330).

5. A mobile device (10) comprising dual display units (310, 330), the device comprising:
a main body including first and second bodies that are foldably coupled to each other;
a first display unit (310), installed in the first body, arranged to display (703) a screen image;
a second display unit (330), installed in the second body, arranged to display (703) a screen image; and
a controller (400) arranged to:
determine (717) whether a dual mode is selected by a user;
receive (705) an input for executing a search function when the first and second bodies are unfolded; and
display (719, 721) a found screen image, searched for according to the execution of the search function, on at least one of the first and second display units (310, 330) according to whether the dual mode is selected;
wherein, to display (719, 721) the found screen image, the controller (400) is arranged to:
display (719), when the dual mode is not selected, the found screen image on the first and second display units (310, 330) which cooperate with each other to serve as one combined display device (300); and
display (721), when the dual mode is selected, the found screen image on one of the first and second display units (310, 330).

6. The device (10) of claim 5, wherein the first and second display units (310, 330) comprise first and second touch input units (315, 335), respectively.

7. The device (10) of claim 6, wherein the controller (400) is further arranged to display different screen images on the first and second display units (310, 330), respectively.

8. The device (10) of claim 6, wherein the first and second display units (310, 330) are arranged to cooperate with each other to serve as one combined display device (300), and display one screen image thereon, and independently operate and display a same screen image or different screen images thereon.

9. The device (10) of claim 6, wherein:
the first or second display unit (310, 330) is further arranged to display a screen image related to the search function; and
the screen image related to the search function comprises a virtual keypad, a dual mode selection control box, a search option item, and an input field.

## Patentansprüche

1. Verfahren zum Anzeigen von Bildschirmbildern auf einem Mobilgerät (10), das mehrere Anzeigeeinheiten (310, 330) aufweist, wobei das Verfahren aufweist:
ein Bestimmen (717), ob durch einen Benutzer ein Dualmodus ausgewählt wurde; und ein Anzeigen (719, 721) eines gefundenen Bildschirmbilds, nach dem gemäß einer Ausführung einer Suchfunktion gesucht worden ist, auf mindestens einer von ersten und zweiten Anzeigeeinheiten (310, 330) auf Grundlage dessen, ob der Dualmodus ausgewählt wurde;
wobei das Anzeigen (719, 721) des gefundenen Bildschirmbilds aufweist:
ein Anzeigen (719), wenn der Dualmodus nicht ausgewählt wurde, des gefundenen Bildschirmbilds auf den ersten und zweiten Anzeigeeinheiten (310, 330), die zusammenwirken, um als eine kombinierte Anzeigevorrichtung (300) zu dienen; und
ein Anzeigen (721), wenn der Dualmodus ausgewählt wurde, des gefundenen Bildschirmbilds auf einer der ersten und zweiten Anzeigeeinheiten (310, 330).

2. Verfahren nach Anspruch 1, wobei das Anzeigen (719, 721) des gefundenen Bildschirmbilds aufweist:
ein Fortsetzen des Anzeigens auf der ersten Anzeigeeinheit (310), wenn der Dualmodus ausgewählt wurde, eines Bildschirmbilds, das vorher auf der ersten Anzeigeeinheit (310) angezeigt worden ist, und ein Anzeigen (721) des gefundenen Bildschirmbilds auf der zweiten Anzeigeeinheit (330).

3. Verfahren nach Anspruch 1, wobei das Anzeigen (719, 721) des gefundenen Bildschirmbilds aufweist:
ein Anzeigen, wenn der Dualmodus ausgewählt wurde, des gefundenen Bildschirmbilds auf der ersten Anzeigeeinheiten (310); und
ein Anzeigen eines Bildschirmbilds, das vorher auf der zweiten Anzeigeeinheit (330) gemäß der Ausführung eines bestimmten Modus angezeigt wurde, auf der zweiten Anzeigeeinheit (330).

4. Verfahren nach Anspruch 1, wobei das Anzeigen (719, 721) des gefundenen Bildschirmbilds aufweist:
ein Anzeigen, wenn der Dualmodus ausgewählt wurde, des gefundenen Bildschirmbilds auf der ersten Anzeigeeinheiten (310); und
ein Anzeigen eines Bildschirmbilds, das vorher auf der ersten Anzeigeeinheit (310)
gemäß der Ausführung eines bestimmten Modus angezeigt wurde, auf der zweiten Anzeigeeinheit (330).

5. Mobilgerät (10), aufweisend doppelte Anzeigeeinheiten (310, 330), wobei das Gerät aufweist: einen Hauptkörper mit ersten und zweiten Körpern, die faltbar aneinander gekoppelt sind;
eine erste Anzeigeeinheit (310), die in dem ersten Körper installiert ist, die zum Anzeigen (703) eines Bildschirmbilds angeordnet ist;
eine zweite Anzeigeeinheit (330), die in dem zweiten Körper installiert ist, die zum Anzeigen (703) eines Bildschirmbilds angeordnet ist; und
einen Controller (400), der angeordnet ist zum:
Bestimmen (717), ob von einem Benutzer ein Dualmodus ausgewählt wurde; Empfangen (705) einer Eingabe zum Ausführen einer Suchfunktion, wenn die ersten und zweiten Körper aufgeklappt sind; und
Anzeigen (719, 721) eines gefundenen Bildschirmbilds, nach dem gemäß der Ausführung der Suchfunktion gesucht worden ist, auf mindestens einer von ersten und zweiten Anzeigeeinheiten (310, 330) gemäß dem, ob der Dualmodus ausgewählt wurde;
wobei zum Anzeigen (719, 721) des gefundenen Bildschirmbilds der Controller (400) angeordnet ist zum:
Anzeigen (719), wenn der Dualmodus nicht ausgewählt wurde, des gefundenen Bildschirmbilds auf den ersten und zweiten Anzeigeeinheiten (310, 330), die zusammenwirken, um als eine kombinierte Anzeigevorrichtung (300) zu dienen; und
Anzeigen (721), wenn der Dualmodus ausgewählt wurde, des gefundenen Bildschirmbilds auf einer der ersten und zweiten Anzeigeeinheiten (310, 330).

6. Gerät (10) nach Anspruch 5, wobei die ersten und zweiten Anzeigeeinheiten (310, 330) jeweils erste und zweite Berührungseingabeeinheiten (315, 335) aufweisen.

7. Gerät (10) nach Anspruch 6, wobei der Controller (400) ferner angeordnet ist, um verschiedene Bildschirmbilder jeweils auf den ersten und zweiten Anzeigeeinheiten (310, 330) anzuzeigen

8. Gerät (10) nach Anspruch 6, wobei die ersten und zweiten Anzeigeeinheiten (310, 330) angeordnet sind, um zusammenzuwirken, um als eine kombinierte Anzeigevorrichtung (300) zu dienen und darauf ein Bildschirmbild anzuzeigen und darauf unabhängig voneinander zu arbeiten und ein selbes Bildschirmbild oder verschiedene Bildschirmbilder anzuzeigen.

9. Gerät (10) nach Anspruch 6, wobei:
die erste oder zweite Anzeigeeinheit (310, 330) ferner angeordnet ist, um ein der Suchfunktion zugehöriges Bildschirmbild anzuzeigen; und
das der Suchfunktion zugehörige Bildschirmbild eine virtuelle Tastatur, ein Auswahlsteuerungsfeld für Dualmodus, ein Suchoptionselement und ein Eingabefeld aufweist.

## Revendications

1. Procédé d'affichage d'images d'écran sur un dispositif mobile (10) comprenant de multiples unités d'affichage (310, 330), le procédé comprenant :
la détermination (717) pour savoir si un mode double est sélectionné par un utilisateur ; et
l'affichage (719, 721) d'une image d'écran trouvée, recherchée selon l'exécution d'une fonction de recherche, sur au moins l'une des première et seconde unités d'affichage (310, 330) sur la base de la sélection ou non du mode double ;
ledit affichage (719, 721) de l'image d'écran trouvée comprenant :
l'affichage (719), lorsque le mode double n'est pas sélectionné, de l'image d'écran trouvée sur les première et seconde unités d'affichage (310, 330) qui coopèrent l'une avec l'autre pour servir de dispositif d'affichage combiné (300) ; et
l'affichage (721), lorsque le mode double est sélectionné, de l'image d'écran trouvée sur l'une des première et seconde unités d'affichage (310, 330).

2. Procédé selon la revendication 1, ledit affichage (719, 721) de l'image d'écran trouvée comprenant :
le fait de continuer à afficher sur la première unité d'affichage (310), lorsque le mode double est sélectionné, une image d'écran qui a été affichée précédemment sur la première unité d'affichage (310) ; et
l'affichage (721) de l'image d'écran trouvée sur la seconde unité d'affichage (330).

3. Procédé selon la revendication 1, ledit affichage (719, 721) de l'image d'écran trouvée comprenant :
l'affichage, lorsque le mode double est sélectionné, de l'image d'écran trouvée sur la première unité d'affichage (310) ; et
l'affichage d'une image d'écran, qui a été précédemment affichée sur la seconde unité d'affichage (330) selon l'exécution d'un mode particulier, sur la seconde unité d'affichage (330).

4. Procédé selon la revendication 1, ledit affichage (719, 721) de l'image d'écran trouvée comprenant :
l'affichage, lorsque le mode double est sélectionné, de l'image d'écran trouvée sur la première unité d'affichage (310) ; et
l'affichage d'une image d'écran, qui a été affichée précédemment sur la première unité d'affichage (310) selon l'exécution d'un mode particulier, sur la seconde unité d'affichage (330).

5. Dispositif mobile (10) comprenant des unités d'affichage doubles (310, 330), le dispositif comprenant :
un corps principal comprenant un premier et un second corps qui sont couplés de manière pliable l'un à l'autre ;
une première unité d'affichage (310), installée dans le premier corps, conçue pour afficher (703) une image d'écran ;
une seconde unité d'affichage (330), installée dans le second corps, conçue pour afficher (703) une image d'écran ; et
un dispositif de commande (400) conçu pour :
déterminer (717) si un mode double est sélectionné par un utilisateur ;
recevoir (705) une entrée pour exécuter une fonction de recherche lorsque les premier et second corps sont dépliés ; et
afficher (719, 721) une image d'écran trouvée, recherchée selon l'exécution de la fonction de recherche, sur au moins l'une des première et seconde unités d'affichage (310, 330) selon que le mode double est sélectionné ou non ;
dans lequel, pour afficher (719, 721) l'image d'écran trouvée, le dispositif de commande (400) est conçu pour :
afficher (719), lorsque le mode double n'est pas sélectionné, l'image d'écran trouvée sur les première et seconde unités d'affichage (310, 330) qui coopèrent l'une avec l'autre pour servir de dispositif d'affichage combiné (300) ; et
afficher (721), lorsque le mode double est sélectionné, l'image d'écran trouvée sur l'une des première et seconde unités d'affichage (310, 330).

6. Dispositif (10) selon la revendication 5, lesdites première et seconde unités d'affichage (310, 330) comprenant une première et une seconde unité d'entrée tactile (315, 335), respectivement.

7. Dispositif (10) selon la revendication 6, ledit dispositif de commande (400) étant en outre conçu pour afficher des images d'écran différentes sur les première et seconde unités d'affichage (310, 330), respectivement.

8. Dispositif (10) selon la revendication 6, lesdites première et seconde unités d'affichage (310, 330) étant conçues pour coopérer l'une avec l'autre pour servir de dispositif d'affichage combiné (300), et afficher une image d'écran sur celles-ci, et fonctionner indépendamment et afficher une même image d'écran ou des images d'écran différentes sur celles-ci.

9. Dispositif (10) selon la revendication 6, dans lequel :
la première ou seconde unité d'affichage (310, 330) est en outre conçue pour afficher une image d'écran associée à la fonction de recherche ; et
l'image d'écran associée à la fonction de recherche comprend un clavier virtuel, un boîtier de commande de sélection de mode double, un élément d'option de recherche et un champ d'entrée.
